## Europäisches Patentamt
## European Patent Office
## Office européen des brevets

(19)

(11) Veröffentlichungsnummer: **0 072 406**
**B1**

(12)

# EUROPÄISCHE PATENTSCHRIFT

(45) Veröffentlichungstag der Patentschrift:
**16.10.85**

(51) Int. Cl.⁴: **B 60 Q 1/14**

(21) Anmeldenummer: **82105645.4**

(22) Anmeldetag: **25.06.82**

(54) Einrichtung zum automatischen Ein- und Ausschalten von Leuchten.

(30) Priorität: **14.08.81 DE 3132207**

(43) Veröffentlichungstag der Anmeldung:
**23.02.83 Patentblatt 83/8**

(45) Bekanntmachung des Hinweises auf die Patenterteilung:
**16.10.85 Patentblatt 85/42**

(84) Benannte Vertragsstaaten:
**AT BE CH FR GB IT LI LU NL SE**

(56) Entgegenhaltungen:
**DE - A - 2 901 196**

(73) Patentinhaber: **KRONE GmbH, Goerzallee 311,
D-1000 Berlin 37 (DE)**

(72) Erfinder: **Hesselbrock, Bernd, Dr., Neheimerstrasse 12,
D-1000 Berlin 27 (DE)**
Erfinder: **Lohr, Joachim, Arnheidstrasse 3,
D-1000 Berlin 28 (DE)**
Erfinder: **Herbst, Gerhard, Flatowerstrasse 20,
D-1000 Berlin 20 (DE)**

(74) Vertreter: **Patentanwälte Beetz sen. - Beetz jun. Timpe -
Siegfried - Schmitt-Fumian, Steinsdorfstrasse 10,
D-8000 München 22 (DE)**

EP 0 072 406 B1

**Beschreibung**

Die vorliegende Erfindung betrifft eine Einrichtung zum automatischen Ein- und Ausschalten von Leuchten, insbesondere Parkleuchten von Kraftfahrzeugen, wobei die Steuerung sowohl in Abhängigkeit der Umgebungshelligkeit als auch der Helligkeit von auftreffendem Licht relativ dazu bewegter Lichtquellen, insbesondere der Helligkeit des Scheinwerferlichts vorbeifahrender Kraftfahrzeuge erfolgt.

Kraftfahrzeuge werden vielfach mit Parkleuchten ausgestattet, welche in Betrieb gesetzt werden, wenn ein Kraftfahrzeug in nicht beleuchteten Gegenden nachts abgestellt wird, wodurch verhindert werden soll, dass bei Annäherung von bewegten Kraftfahrzeugen in ungewünschter Weise ein Auffahrunfall zustandekommt. Derartige Parkleuchten haben jedoch den Nachteil, dass bei längerem Betrieb eine Entleerung der Fahrzeugbatterie auftritt.

Es ist somit bereits eine Einrichtung zum automatischen Ein- und Ausschalten von Parkleuchten bekannt (siehe DE-A-2527877), bei welcher zwei photoelektrische Bauelemente vorgesehen sind, wobei das erste photoelektrische Bauelement das Unter- und Überschreiten einer Mindest-Umgebungsgrundhelligkeit feststellt, während das zweite photoelektrische Bauelement das gerichtete Licht von sich bewegenden Lichtquellen erfasst und in Abhängigkeit davon die Parkleuchte einschaltet. Diese Einrichtung hat jedoch den Nachteil, dass zur automatischen Steuerung der Parkleuchte ein relativ hoher Aufwand erforderlich ist.

Es ist die Aufgabe der vorliegenden Erfindung, die bekannte Einrichtung zur automatischen Ein- und Ausschaltung von Parkleuchten dahingehend zu verbessern, dass für die Durchführung der Steuerung der notwendige schaltungsmässige Aufwand reduzierbar ist.

Diese Aufgabe wird erfindungsgemäss dadurch gelöst, dass das Ein- und Ausschalten der Leuchte durch Steuerung eines optischen Sensors erfolgt, dessen Ausgangssignal innerhalb eines Vergleichskreises zum Vergleichen der Umgebungshelligkeit mit einem vorgegebenen Helligkeitsschwellwert und innerhalb eines Vergleichskreises zur Feststellung eines Dunkel-Hell-Überganges herangezogen ist.

Im Rahmen der vorliegenden Erfindung wird somit das Signal des optischen Sensors zweifach verwertet, indem zuerst ein Vergleich zwischen der tatsächlich bestehenden Umgebungshelligkeit mit einem vorgegebenen Helligkeitsschwellwert stattfindet. Wird dabei der vorgegebene Helligkeitsschwellwert von der tatsächlich bestehenden Umgebungshelligkeit überschritten, so ist die Umgebungshelligkeit ausreichend, so dass das stehende Fahrzeug nicht gegen vorbeifahrende Fahrzeuge gesichert werden muss. Wird dieser Helligkeitsschwellwert jedoch nicht überschritten, so ist die Umgebungshelligkeit nicht ausreichend. Nur in diesem Fall wird dann eine zweite Anordnung zur Auswertung eines Dunkel-Hell-Überganges in Bereitschaft gesetzt, welche unmittelbar auf Licht von sich auf ihr zu bewegenden Lichtquellen, insbesondere bei Scheinwerferlicht vorbeifahrender Kraftfahrzeuge, reagiert und damit die Parkleuchte einschaltet, falls diese Lichtquellen einen Dunkel-Hell-Übergang verursachen. Bleibt die Beleuchtungsstärke nach einem Dunkel-Hell-Übergang konstant oder wird diese ohne einen erneuten Dunkel-Hell-Übergang erneut verringert, so schaltet die Parkleuchte nach vorgegebener Zeit wieder ab. Tritt jedoch eine kurzzeitige Verdunkelung innerhalb dieser vorgegebenen Zeit auf, so erfolgt das Abschalten mit Hilfe eines Zeitgliedes, z. B. mit einem nachgetriggerten Monoflop, erst nach einem vorgegebenen Zeitintervall, und zwar von dem Zeitpunkt an, an welchem die Beleuchtungsstärke wieder konstant bleibt oder im Anschluss daran ohne einen erneuten Dunkel-Hell-Übergang sich verringert.

Eine vorteilhafte Weiterbildung der Erfindung besteht darin, dass zur Unterscheidung von normalen Umgebungshelligkeitsschwankungen und Dunkel-Hell-Übergängen, so wie sie durch sich nähernde Kraftfahrzeuge bedingt sind, die Anordnung zum Vergleichen des vorgegebenen Helligkeitsschwellwertes mit der gemessenen Umgebungshelligkeit nur dann reagiert, wenn Helligkeitsschwankungen über einen vorher bestimmbaren Zeitraum von z. B. 30 sec anhalten.

Die Erfindung soll nunmehr anhand des in der Zeichnung dargestellten Ausführungsbeispieles näher erläutert werden. Es zeigen:

Fig. 1 eine mit einem Sensor versehene Parkleuchte im Schnitt;

Fig. 1a die Leuchte von Fig. 1 in Seitenansicht, und

Fig. 2 ein Blockschaltbild mit Darstellung des Signalflusses der beiden Auswertungsanordnungen der Einrichtung gemäss der Erfindung.

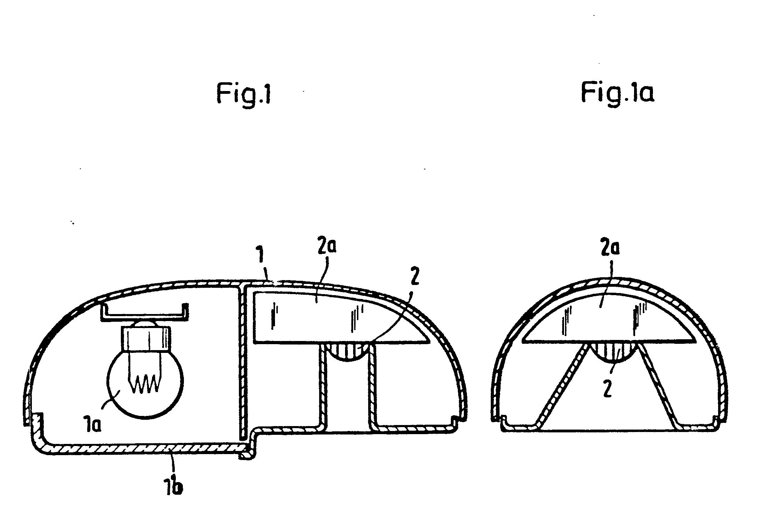

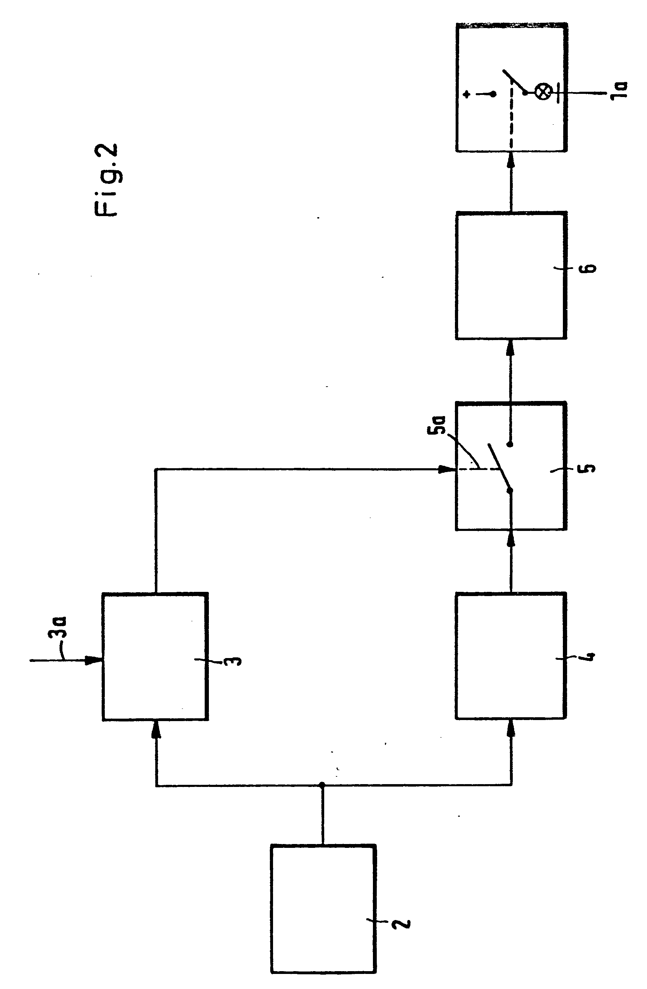

Die Fig. 1 und 1a zeigen eine Parkleuchte 1 mit einer Glühbirne 1a sowie einem Sensor 2. Die Glühbirne 1a gibt dabei ihr Licht in bekannter Weise durch ein farbiges Deckglas 1b ab. Der Sensor 2 dient hingegen zur Erfassung der Umgebungshelligkeit und des gerichteten Lichtes von sich bewegenden Lichtquellen eines Scheinwerfers von entgegenkommenden Kraftfahrzeugen. Hinter diesem Sensor 2 ist schematisch ein Kasten 2a dargestellt, welcher die Steuerkreise nach Fig. 2 enthält.

Die Fig. 2 zeigt in schematischer Darstellung die vorgesehenen Steuerkreise der erfindungsgemässen Einrichtung. Entsprechend dieser Figur ist ein Vergleichskreis 3 vorgesehen, welcher in Abhängigkeit des Ausgangssignals des Sensors 2 einen Vergleich der Umgebungshelligkeit zu einem vorgegebenen Helligkeitsschwellwert 3a durchführt und nach einem vorher festgelegten Zeitraum, beispielsweise 30 sec, ein entsprechendes Signal an einen Schaltkreis 5 abgibt. Dieser Schaltkreis 5, von welchem aus das Einschalten der Glühbirne 1a der Parkleuchte 1 gesteuert wird, steht über einen weiteren Vergleichskreis 4 mit dem Sensor 2 in Verbindung. Dieser Vergleichskreis 4 führt dann einen weiteren Vergleich durch, wobei festgestellt wird, ob beispielsweise der durch ein sich näherndes Fahrzeug bedingte Helligkeitsanstieg eine vorgegebene Helligkeitsschwelle überschreitet. Sind beide Bedingungen erfüllt, d. h. ist die durch den Vergleichskreis 3 festgestellte Umgebungshelligkeit hinreichend gering und ist der durch den Vergleichskreis 4 festgestellte Helligkeitsanstieg aufgrund des sich nähernden Fahrzeuges ausreichend gross, wird der Schaltkreis 5 geschlossen, so dass die Glühbirne 1a der Parkleuchte 1 zum Aufleuchten gebracht, so dass das stehende Fahrzeug hinreichend gesichert wird.

Die erneute Abschaltung der Parkleuchte 1 erfolgt dann in folgender Weise:

Bleibt nach einem Dunkel-Hell-Übergang die Beleuchtungsstärke mehr oder weniger konstant, d. h. nimmt die allgemeine Aussenhelligkeit wieder zu, so schaltet die Parkleuchte 1 über den Vergleichskreis 3 wieder ab. Tritt jedoch innerhalb eines vorgegebenen Zeitintervalls erneut eine Verdunkelung auf, indem sich beispielsweise das sich nähernde Fahrzeug wieder entfernt, so erfolgt das Abschalten der Parkleuchte 1 erst nach vorgegebenem Zeitintervall, welches mit Hilfe eines Zeitgliedes 6, beispielsweise in Form eines nachgetriggerten Monoflops, festgelegt wird, und zwar von dem Zeitpunkt an, an welchem die Beleuchtungsstärke wieder konstant bleibt oder im Anschluss daran ohne erneuten Dunkel-Hell-Übergang sich verringert. Durch dieses dynamische Auslöseverhalten kann im Rahmen der vorliegenden Erfindung eine Fehlauslösung auch bei kritischen Beleuchtungsverhältnissen verhindert werden.

## Patentansprüche

1. Einrichtung zum automatischen Ein- und Ausschalten von Leuchten, insbesondere Parkleuchten von Kraftfahrzeugen, wobei die Steuerung sowohl in Abhängigkeit der Umgebungshelligkeit als auch der Helligkeit von auftreffendem Licht relativ dazu bewegter Lichtquellen, insbesondere der Helligkeit des Scheinwerferlichts vorbeifahrender Kraftfahrzeuge, erfolgt, dadurch gekennzeichnet, dass das Ein- und Ausschalten der Leuchte (1) durch Steuerung eines optischen Sensors (2) erfolgt, dessen Ausgangssignal innerhalb eines Vergleichskreises (3) zum Vergleichen der Umgebungshelligkeit mit einem vorgegebenen Helligkeitsschwellwert (3a) und innerhalb eines Vergleichskreises (4) zur Feststellung eines Dunkel-Hell-Überganges herangezogen ist.

2. Einrichtung nach Anspruch 1, dadurch gekennzeichnet, dass zusätzlich ein Zeitglied (6) vorgesehen ist, welches in Anschluss der Feststellung eines Dunkel-Hell-Überganges die erneute Abschaltung der Leuchte (1) steuert.

3. Einrichtung nach Anspruch 1 oder 2, dadurch gekennzeichnet, dass der die Umgebungshelligkeit messende Vergleichskreis (3) ein Ausgangssignal nur nach einem vorgegebenen Zeitintervall abgibt.

## Claims

1. A device for automatically turning lights on and off, especially parking lights of automotive vehicles, in which control is effected in response to both the ambient light intensity and also the intensity of incident light from light sources which move relative thereto, especially the intensity of light from the headlamps of passing automotive vehicles, characterized in that the light (1) is turned on and off through control of an optical sensor (2) whose output signal is used in a comparison circuit (3) for comparing the ambient light intensity with a predetermined threshold intensity (3a) and in a comparison circuit (4) for determining a dark-light-transition.

2. A device as claimed in claim 1, characterized in that a timing circuit (6) is additionally provided, which upon determination of a dark-light-transition controls the renewed turning-off of the light (1).

3. A device as claimed in claim 1 or claim 2, characterized in that the comparison circuit (3) for measuring the ambient light intensity delivers an output signal only after a predetermined time interval.

## Revendications

1. Dispositif pour la mise en et hors circuit automatique d'appareils d'éclairage, en particulier, de feux de stationnement de véhicules automobiles, la commande ayant lieu aussi bien en fonction de la clarté ambiante que de la clarté de la lumière incidente provenant de sources lumineuses effectuant un mouvement relatif, en particulier, de la clarté de la lumière des projecteurs des véhicules automobiles passant auprès, caractérisé en ce que la mise en et hors circuit de l'appareil d'éclairage (1) a lieu sous la commande d'un capteur optique (2) dont le signal de sortie est utilisé à l'intérieur d'un circuit de comparaison (3) en vue de comparer la clarté ambiante avec une valeur seuil prédéterminée de clarté (3a), ainsi qu'à l'intérieur d'un circuit de comparaison (4) destiné à fixer une transition obscurité/clarté.

2. Dispositif selon la revendication 1, caractérisé en ce qu'on prévoit, en outre, un relais temporisé (6) qui, à la suite de la détermination d'une transition obscurité/clarté, commande à nouveau la mise hors circuit de l'appareil d'éclairage (1).

3. Dispositif selon la revendication 1 ou 2, caractérisé en ce que le circuit de comparaison (3) mesurant la clarté ambiante n'émet un signal de sortie qu'après un intervalle de temps prédéterminé.

Fig.1          Fig.1a

Fig.2

0072406